# EUROPÄISCHE PATENTANMELDUNG

(11) **EP 0 801 358 A2**
(43) Veröffentlichungstag der Anmeldung: **15.10.1997**
(21) Anmeldenummer: 97201012.8
(22) Anmeldetag: 07.04.1997
(51) Int. Cl.: G06K 19/00

(54) **Verfahren zum Betrieb eines Systems aus einer Basisstation und einem damit kontaktlos gekoppelten Transponders sowie dafür geeignetes System**

(30) Priorität: 12.04.1996 DE 19614455
(71) Anmelder: Philips Patentverwaltung GmbH, 22335 Hamburg (DE); PHILIPS ELECTRONICS N.V., 5621 BA Eindhoven (NL)
(72) Erfinder: Timm, Volker, Dr., Röntgenstrasse 24, 22335 Hamburg (DE); Armbrust, Dirk, Röntgenstrasse 24, 22335 Hamburg (DE); Heyer, Gerwin, Röntgenstrasse 24, 22335 Hamburg (DE); Ritter, Siegfried, Dr., Röntgenstrasse 24, 22335 Hamburg (DE)
(74) Vertreter: Peters, Carl Heinrich, Dipl.-Ing.

(57) **Zusammenfassung**

Beim Betrieb kontaktlos mit einer Basisstation gekoppelter Transponder ohne eigene Energieversorgung erzeugt der Transponder die Speisespannung für die elektronische Schaltung darin über das von der Basisstation ausgesandte Feld. Die Höhe der Speisespannung hängt davon ab, wie gut der Schwingkreis des Transponders auf die Trägerfrequenz der Basisstation abgestimmt ist. Um diese Abstimmung möglichst optimal zu machen, wird erfindungsgemäß ein Verfahren angegeben, um auf dem Transponder selbst automatisch einen Abgleich durchzuführen. Dieser Abgleich wird vorzugsweise am Schluß des Herstellungsvorgangs, zweckmäßig jedoch auch später bei wiederholter Benutzung des Transponders durchgeführt.

## Beschreibung

Die Erfindung betrifft ein Verfahren zum Betrieb eines Systems aus einer Basisstation und einem kontaktlos mit der Basisstation gekoppelten Transponder mit einer Schaltungsanordnung und mit einem Schwingkreis aus einer Spule und wenigstens einem ersten Kondensator, dem mehrere zweite Kondensatoren parallel schaltbar sind, wobei durch ein von der Basisstation ausgesandtes elektromagnetisches Wechselfeld mit einer festgelegten Frequenz in der Spule des Schwingkreises insbesondere die elektrische Leistung zur Speisung der Schaltungsanordnung erzeugt wird, sowie ein dafür geeignetes System und einen Transponder für ein derartiges System.

Ein Verfahren der genannten Art ist bekannt aus der EP-0 615 136. Dabei sendet die Basisstation das Trägersignal für eine gewisse Zeitspanne aus, wahrend der im Transponder ein Energiespeicher geladen wird. Danach schaltet die Basisstation das Trägersignal ab, und der Transponder verwendet die im Energiespeicher gespeicherte Energie, um seinerseits ein hochfrequentes Signal auszusenden, dessen Frequenz nun durch den Schwingkreis im Transponder bestimmt ist. Die dadurch in der Basisstation auftretende Empfangsenergie wird gespeichert, und danach überträgt die Basisstation Kommandos an den Transponder, die die Resonanzfrequenz des Schwingkreises darin durch Zuschalten oder Abschalten von Kondensatoren verändern. Der Transponder sendet nun Signale mit der veränderten Frequenz aus, und in der Basisstation wird wieder die Empfangsfeldstärke gemessen. Aus den Vergleichen der gemessenen Empfangsstärken erzeugt die Basisstation schließlich ein Kommando, das die endgültige Kombination von zugeschalteten bzw. abgeschalteten Kondensatoren bestimmt, um die Resonanzfrequenz des Schwingkreises im Transponder möglichst genau auf die Frequenz des Trägersignals abzustimmen.

Dieses bekannte Verfahren ist relativ umständlich und zeitraubend, insbesondere wenn der optimale Abgleich möglichst genau angenähert werden soll, was mit dem bekannten Verfahren nicht immer zuverlässig möglich ist.

Aufgabe der Erfindung ist es daher, ein Verfahren der eingangs genannten Art anzugeben, mit dem ein Abgleich der Resonanzfrequenz des Transponders auf die Trägerfrequenz der Basisstation möglichst einfach und zuverlässig durchführbar ist, so daß dieses Verfahren auch leicht wiederholt und im Grenzfall bei jeder Kopplung des Transponders mit der Basisstation schnell durchgeführt werden kann.

Diese Aufgabe wird erfindungsgemäß dadurch gelöst, daß im Transponder ein intern gesteuerter Abgleich erfolgt, in dem nach Beginn des Empfangs des Wechselfeldes die in der Spule erzeugte Spannung gemessen wird, dann dem ersten Kondensator ein dritter Kondensator vorgegebener Kapazität parallelgeschaltet wird und die Veränderung der Spannung in der Spule festgestellt wird und abhängig von der Änderung das Abschalten oder Zuschalten wenigstens eines zweiten Kondensators parallel zum ersten Kondensator gesteuert wird.

Der Abgleich der Resonanzfrequenz erfolgt erfindungsgemäß also vollständig im Transponder, ohne daß die Basisstation dabei mitwirkt. Da für den Abgleich ein wechselseitiger Betrieb von Basisstation und Transponder wegfällt, kann das erfindungsgemäße Verfahren auch schnell durchgeführt werden, so daß ein Benutzer den Abgleichvorgang praktisch nicht bemerken kann.

Ein möglichst genauer Abgleich der Resonanzfrequenz ist nach einer Ausgestaltung der Erfindung dadurch möglich, daß das Zuschalten oder Abschalten der zweiten Kondensatoren und das Feststellen der Veränderung der Spannung in der Spule wiederholt erfolgt, bis eine vorgegebene Bedingung erfüllt ist. Die Genauigkeit, mit der das Optimum des Abgleichs erreicht werden kann, hängt dann nur von der Anzahl der Kondensatoren und deren Werten ab.

Eine gute Genauigkeit wird mit einer möglichst geringen Anzahl von Kondensatoren zweckmäßig dadurch erreicht, daß mehrere zweite Kondensatoren mit dualer Stufung der Kapazitäten vorgesehen sind und beginnend mit dem Kondensator höchster Kapazität nacheinander die Kondensatoren mit abnehmender Kapazität zugeschaltet bzw. abgeschaltet werden. Dadurch wird das Optimum des Abgleichs auch relativ schnell erreicht.

Da die einzelnen Elemente des Transponders, die die Resonanzfrequenz beeinflussen, einer gewissen Änderung durch Alterung oder anderer Einflüsse unterliegen können, ist es zweckmäßig, wenn der Abgleich wiederholt bei jeder Kopplung des Transponders mit der Basisstation durchgeführt wird. Alternativ dazu kann der Abgleich auch wiederholt bei einer Kopplung des Transponders mit der Basisstation nur bei Vorliegen vorgegebener Bedingungen durchgeführt werden. Eine solche Bedingung ist beispielsweise die bei einer Kopplung im Transponder erzeugte elektrische Leistung, denn wenn der Transponder in geringer Entfernung von der Basisstation betrieben wird, kann es sein, daß auch bei nicht optimal abgeglichem Schwingkreis im Transponder die elektrische Leistung für einen zuverlässigen Betrieb ausreichend ist. In diesem Fall braucht der Abgleich dann nur durchgeführt zu werden, wenn die in der Spule erzeugte Spannung unterhalb eines vorgegebenen Schwellwerts liegt.

Das Zuschalten oder Abschalten der Kondensatoren für den Abgleich kann derart erfolgen, daß die Kombination zugeschalteter und abgeschalteter Kondensatoren bei jeder Kopplung des Transponders mit der Basisstation erneut von einem Grundzustand durchgeführt wird. Dabei kann es jedoch sein, daß bei einer zu weit abliegenden Resonanzfrequenz die im Transponder empfangene elektrische Leistung nicht ausreicht, den Abgleichvorgang durchzuführen. Außerdem kann davon ausgegangen werden, daß die Basisstation einen quarzgesteuerten Oszillator enthält, so daß die Trägerfrequenz sehr konstant ist und sogar bei verschiedenen Basisstationen praktisch gleich ist. Aus diesem Grund ist es zweckmäßig, daß nach Abschluß jedes Abgleichs die Kombination zugeschalteter und abgeschalteter zweiter Kondensatoren dauerhaft abgespeichert wird. Wenn dann eine gewisse Alterung der Elemente des Transponders auftritt, kann dennoch damit gerechnet werden, daß die Resonanzfrequenz zumindest derart in der Nähe der Trägerfrequenz liegt, daß ein Abgleichsvorgang auch bei einer größeren Entfernung zwischen Transponder und Basisstation durchführbar ist, da nur eine relativ geringe Veränderung der Resonanzfrequenz nötig ist.

Das dauerhafte Abspeichern der Kombinationen von Kondensatoren kann jedoch Probleme aufwerfen, wenn für die Speicherung Speicherelemente benutzt werden, die nur eine begrenzte Anzahl von Schreibzyklen zulassen. Andererseits ist es nicht unbedingt notwendig, auch Abgleichvorgänge, bei denen die Resonanzfrequenz nur geringfügig verändert wird, dauerhaft abzuspeichern, da bei einer geringfügig abweichenden Resonanzfrequenz immer noch genügend elektrische Leistung im Transponder erzeugt werden kann, um den Abgleichvorgang durchzuführen. Daher ist es manchen Fällen zweckmäßig, daß nach Abschluß eines wiederholten Abgleichs die Kombination zugeschalteter und abgeschalteter zweiter Kondensatoren für die Dauer der Kopplung flüchtig abgespeichert wird und nur bei Vorliegen vorgegebener Bedingungen permanent abgespeichert wird. Dadurch wird die Anzahl von Speichervorgängen für die Kombination zugeschalteter oder abgeschalteter Kondensatoren gering gehalten.

Ein erfindungsgemäßes System mit einer Basisstation und mit einem Transponder, mit dem das angegebene erfindungsgemäße Verfahren mit einfachen Mitteln durchführbar ist, sowie ein dafür geeigneter Transponder sind in den weiteren Unteransprüchen angegeben.

Ausführungsbeispiele der Erfindung werden nachfolgend anhand der Zeichnung näher erläutert. Es zeigen:
Fig. 1 die wichtigsten Elemente eines Systems aus einer Basisstation und einem Transponder,
Fig. 2 eine erfindungsgemäße Anordnung zum Frequenzabgleich im Transponder,
Fig. 3, 4 und 5 Diagramme zur Erläuterung der Wirkung zusätzlicher Kondensatoren,
Fig. 6 ein Diagramm zur Erläuterung zeitabhängiger Änderungen der Frequenz und deren Kompensation.

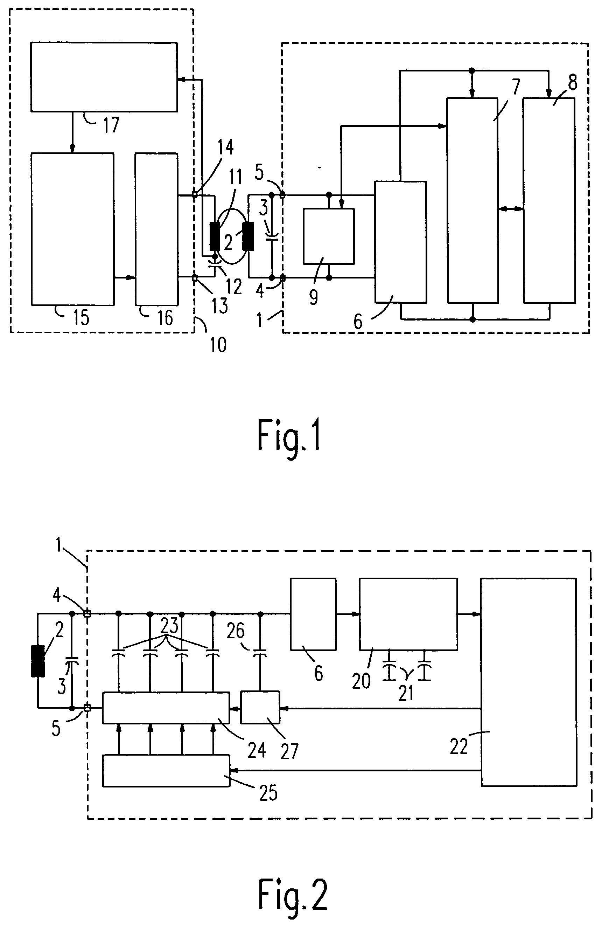

In Fig. 1 sind von einer Basisstation 10 nur die wichtigsten Elemente dargestellt, nämlich eine Steueranordnung 15, ein Oszillator mit Modulator und Treiber 16 und eine Demodulationsanordnung 17. Der Oszillator 16 ist über die Anschlüsse 13 und 14 an einen Serienschwingkreis aus einer Spule 11 und einem Kondensator 12 angeschlossen. Der Verbindungspunkt zwischen Spule 11 und Kondensator 12 führt auf den Demodulator 17.

Die Spule 11 ist mit einer Spule 2 gekoppelt, die mit einem Kondensator 3 einen Parallelschwingkreis bildet, der mit den Anschlüssen 4 und 5 eines Transponders 1 verbunden ist. Von dem Transponder 1 sind ebenfalls nur die wichtigsten Elemente dargestellt, nämlich eine Modulations- und Demodulationsanordnung 9, eine Spannungsversorgungseinheit 6 sowie eine Steueranordnung 7 und ein zumindest teilweise nichtflüchtiger Speicher 8, die von der Spannungsversorgungseinheit 6 gespeist werden. Der Transponder 1 weist also keine eigene Energiequelle auf, sondern die Energie zur Versorgung der Steueranordnung und des Speichers wird von der in der Spule 2 induzierten Spannung abgeleitet. Die Übertragung von Daten von der Basisstation 10 zum Transponder 1 erfolgt beispielsweise durch Amplitudenmodulation, die in der Demodulationsanordnung 9 des Transponders 1 ausgewertet und der Steueranordnung 7 zugeführt wird, und die Übertragung von Daten vom Transponder 1 zur Basisstation 10 erfolgt dadurch, daß die Basisstation durch ein konstantes Trägersignal ein elektromagnetisches Feld aussendet, in dem die Spule 2 sich befindet, und über die Modulationsanordnung 9 wird der Schwingkreis mit der Spule 2 und dem Kondensator 3 entsprechend den zu übertragenden Daten unterschiedlich belastet. Diese Veränderung der Belastung wirkt sich in dem Schwingkreis aus der Spule 11 und dem Kondensator 12 der Basisstation 10 aus und wird über die Demodulationsanordnung 17 ausgewertet und der Steueranordnung 15 zugeführt.

Die im Transponder 1 erzeugte elektrische Leistung hängt ab von der Stärke des von der Basisstation 10 erzeugten elektromagnetischen Feldes, die aus naheliegenden Gründen begrenzt ist, sowie der Kopplung zwischen den beiden Spulen 11 und 2. In diese Kopplung geht auch die Resonanzfrequenz des Schwingkreises aus der Spule 2 und dem Kondensator 3 ein, die sich auch auf die Qualität der Datenübertragung vom Transponder 1 zur Basisstation 10 auswirkt. Es ist daher erwünscht, die Resonanzfrequenz des Schwingkreises mit der Spule 2 möglichst genau auf die Trägerfrequenz des in der Basisstation enthaltenen Oszillators abzustimmen. Da der Oszillator in der Basisstation leicht als quarzgesteuerter Oszillator mit hoher Frequenzgenauigkeit ausgeführt werden kann und häufig mehrere verschiedene Transponder mit derselben Basisstation zusammenarbeiten, ist es zweckmäßig, die Resonanzfrequenz des Schwingkreises des Transponders 1 auf die Trägerfrequenz der Basisstation einzustellen.

Eine hierfür geeignete Anordnung in dem Datenträger 1 ist in Fig. 2 dargestellt, wobei die meisten der übrigen Elemente des Transponders 1 der Übersichtlichkeit halber hier nicht dargestellt sind. Diese Anordnung enthält eine Anzahl von Kondensatoren 23, die über schematisch als ein Block 24 dargestellte Schalter dem Kondensator 3 parallelgeschaltet werden können. Die Schalter 24 werden durch eine Anordnung 25 angesteuert und enthalten für jeden Kondensator wenigstens ein flüchtiges und ein nichtflüchtiges Speicherelement. Ferner ist ein Kondensator 26, der nachfolgend als Hilfskondensator bezeichnet wird, über einen Schalter 27 parallel zum Kondensator 3 schaltbar.

Es ist klar, daß in der Praxis auch mehr als die dargestellten Kondensatoren angewendet werden können und daß die Schalter nicht nur mit einem Anschluß, sondern auch mit beiden Anschlüssen der Kondensatoren verbunden sein können.

Wenn der Transponder 1 in das elektromagnetische Feld der Basisstation gebracht wird, erzeugt die Spannungsversorgungseinheit 6 eine Speisespannung zur Versorgung der in diesem Bild nicht gezeigten Elemente, die auch einer Vergleichsschaltung 20 sowie einer Abgleichschaltung 22 zugeführt wird. Die Vergleichsschaltung 20 weist zwei Kondensatoren 21 auf, und auf einem dieser Kondensatoren wird die Speisespannung, d.h. deren Wert gespeichert. Die Abgleichschaltung 22 steuert dann den Schalter 27 an, um den Hilfskondensator 26 parallel zum Kondensator 3 zu schalten und damit die Resonanzfrequenz zu verringern.

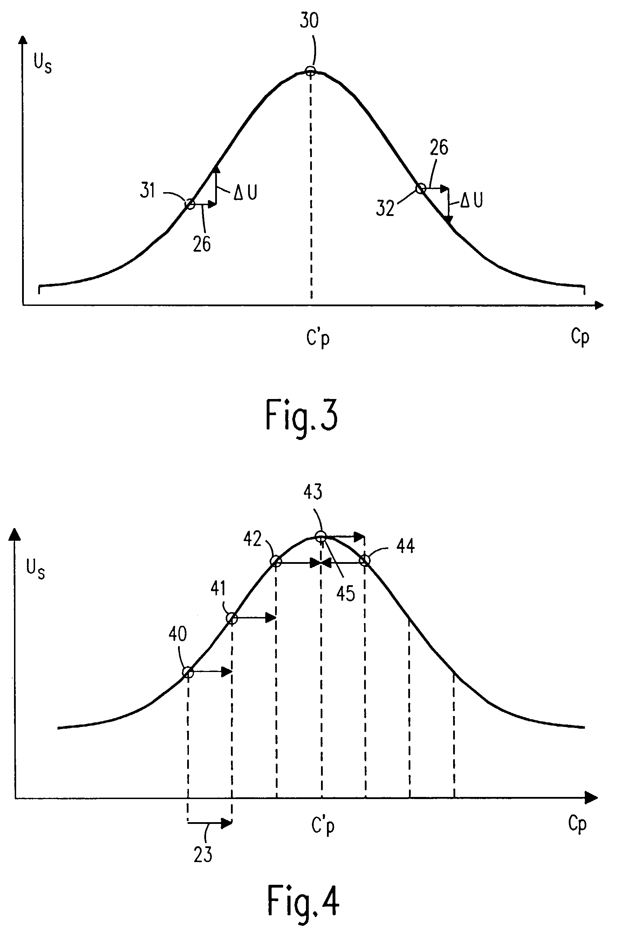

Der Einfluß dieses Hilfskondensators auf die erzeugte Speisespannung ist in Fig. 3 angedeutet, die die Abhängigkeit der Speisespannung Uₛ von einer zum Schwingkreis parallelgeschalteten Kapazität Cp zeigt. Es sei bemerkt, daß eine Erhöhung der Kapazität einer Erniedrigung der Resonanzfrequenz entspricht. Als Anfangszustand vor einem erstmaligen Abgleich wird angenommen, daß die Kapazität des Kondensators 3 so klein ist daß die Resonanzfrequenz zu hoch und damit die Speisespannung klein ist. Mit steigender Parallelkapazität Cp steigt auch die Speisespannung an, um bei dem Punkt 30, der einer Parallelkapazität Cp' entspricht, ein Maximum zu erreichen und danach wieder abzufallen.

Die Induktivität der Spule 2 und die Kapazität des Kondensators 3 werden bei der Herstellung des Datenträgers derart gewählt, daß ohne parallelgeschaltete Kondensatoren die Resonanzfrequenz auch unter Berücksichtigung aller Fertigungstoleranzen zu hoch ist. Wenn jedoch nach dem erstmaligen Abgleich einige Kondensatoren 23 parallelgeschaltet sind, kann bei der nächsten Benutzung des Datenträgers die Resonanz des Schwingkreises aus der Spule 2 und dem Kondensator 3 sowie den parallelgeschalteten Kondensatoren 23 sowohl höher als auch niedriger als das Optimum sein. Durch das Zuschalten des Hilfskondensators 26 wird nun festgestellt, auf welcher Seite des Optimums oder Maximums die Gesamtkapazität des Schwingkreises liegt. Genau gesagt wird allerdings nur festgestellt, ob durch eine Vergrößerung der Kapazität eine Erhöhung oder eine Erniedrigung der Speisespannung erfolgt. Wenn beispielsweise die Gesamtkapazität dem Punkt 30 entspricht und der Hilfskondensator 26 parallelgeschaltet wird, erhöht sich die Speisespannung um ΔU. Andererseits wird beim Punkt 32, bei dem die Parallelkapazität bereits zu groß ist, durch das Zuschalten des Hilfskondensators 26 die Speisespannung um ΔU verringert.

Diese Vorgänge werden in der Vergleichsschaltung 20 ausgewertet, wo einer der beiden Kondensatoren 21 den Wert der Speisespannung vor dem Parallelschalten des Hilfskondensators 26 enthält und der andere Kondensator 21 die Speisespannung nach dem Parallelschalten. Die Vergleichsschaltung 20 vergleicht nun die Spannungen an den beiden Kondensatoren 21, und abhängig von diesem Vergleich wird die Abgleichschaltung 22 angesteuert, um vorzugsweise die flüchtigen Speicherelemente der Schalter 24 zu schließen und die Parallelkapazität damit zu erhöhen oder um bereits geschlossene Schalter zu öffnen und die Parallelkapazität zu verringern. Außerdem wird der Hilfskondensator 26 wieder abgeschaltet.

Die nun entstehende Speisespannung wird wieder in einem der Kondensatoren 21 gespeichert und mit der in anderem Kondensator 21 noch gespeicherten Spannung verglichen. Abhängig von diesem Vergleich werden weitere Kondensatoren 23 parallelgeschaltet oder wieder abgeschaltet, abhängig von der Stufung der Werte der Kondensatoren, wie nachfolgend erläutert wird. Dieser Ablauf wird ggf. mehrmals wiederholt, bis das Optimum der Speisespannung möglichst gut erreicht ist.

Für die Stufung der Werte der Kondensatoren 23 bestehen verschiedene Möglichkeiten. Bei einer ersten Möglichkeit, deren Wirkung in Fig. 4 angedeutet ist, haben alle Kondensatoren 23 die gleichen Werte. Zunächst wird angenommen, daß sich das System im Punkt 40 befindet, so daß die Parallelkapazität Cp zu klein ist und beim Zuschalten des Hilfskondensators 26 sich die Speisespannung erhöht hat (entsprechend dem Punkt 31 in Fig. 3). Im ersten Schritt wird dann also einer der Kondensatoren 23 parallelgeschaltet, und das System gelangt zum Punkt 41 mit einer höheren Speisespannung. Diese wird wieder gespeichert und erneut ein Kondensator 23 parallelgeschaltet, und im angenommenen Beispiel gelangt das System zum Punkt 42, bei dem die Speisespannung nochmals höher ist. Auch beim Zuschalten eines dritten Kondensators 23 wird der Punkt 43 erreicht, bei dem die Speisespannung nochmals höher ist. Wenn nun ein vierter Kondensator 23 parallelgeschaltet wird, wird der Punkt 44 erreicht, bei dem die Speisespannung wieder niedriger ist. Dies bewirkt, daß die Abgleichschaltung 22 in Fig. 2 einen Kondensator 23 wieder abschaltet, wodurch der Punkt 45 erreicht wird, der mit dem Punkt 43 zusammenfällt. Damit ist der Abgleichvorgang abgeschlossen.

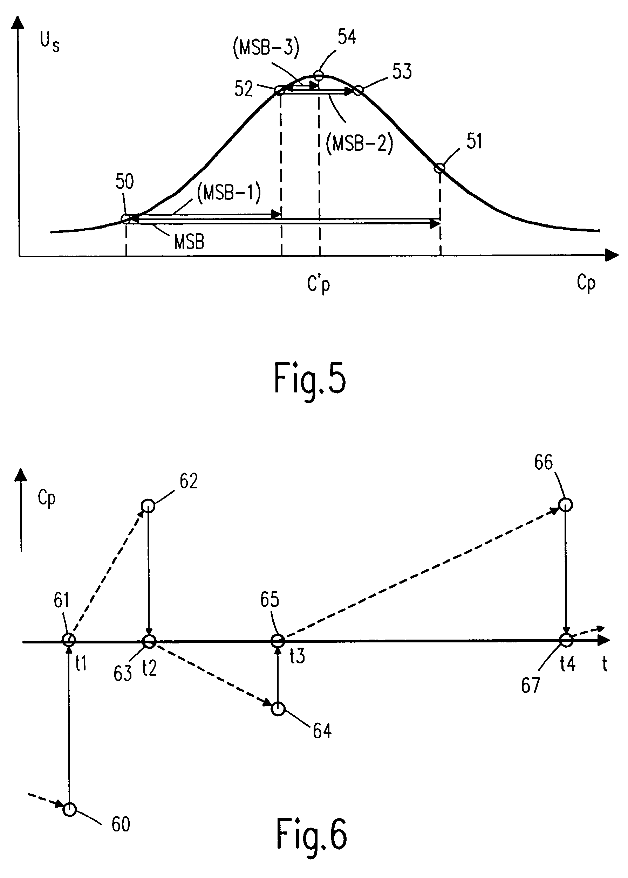

Eine andere Möglichkeit mit einer dualen Abstufung der Werte der Kondensatoren 23 ist in Fig. 5 angedeutet. Hier ist zunächst angenommen, daß sich das System im Punkt 50 befindet, bei dem wie im vorhergehenden Beispiel die Parallelkapazität zu gering ist, was mittels des Hilfskondensators 26 festgestellt wurde. Daraufhin wird als erstes der Kondensator mit dem höchsten Wert MSB parallelgeschaltet, wodurch das System zum Punkt 51 gelangt. Dieser Punkt liegt nun auf der anderen Seite der optimalen Parallelkapazität Cp'. Diese Tatsache kann dadurch festgestellt werden, daß nun erneut der Hilfskondensator parallelgeschaltet und die dadurch entstehende Veränderung der Speisespannung gemessen wird. Es kann jedoch auch gleich der Kondensator mit nächstkleinerem Wert (MSB-1) parallelgeschaltet werden. In beiden Fällen ergibt die Parallelschaltung, daß die Speisespannung niedriger wird, so daß die Abgleichschaltung 22 den Kondensator mit dem höchsten Wert MSB wieder abschaltet und nur den nächstkleineren Wert angeschaltet läßt. Damit gelangt das System zum Punkt 52, bei dem die Speisespannung Uₛ höher ist als im Punkt 50. Davon ausgehend wird erneut geprüft, ob beim Parallelschalten des Hilfskondensators 26 oder beim Parallelschalten eines Kondensators 23 mit nächstniedrigerem Wert (MSB-2) die Speisespannung sich erhöht. Im letzteren Fall wird der Punkt 53 erreicht, bei dem die Speisespannung keinen größeren Wert hat als im Punkt 52, und der Kondensator mit dem Wert (MSB-2) wird wieder abgeschaltet und der Kondensator 23 mit dem nächstkleineren Wert (MSB-3) wird parallelgeschaltet, wodurch der Punkt 54 erreicht wird. Dies sei im wesentlichen der optimale Punkt bei der gesamten Parallelkapazität Cp', von dem aus durch Parallelschalten weiterer Kondensatoren 23 oder des Hilfskondensators 26 keine Verbesserung erreicht wird. Dies kann wieder dadurch festgestellt werden, daß nacheinander alle Kondensatoren 23 mit abnehmender Kapazität parallelgeschaltet werden und dabei keine Erhöhung der Speisespannung ermittelt wird, wobei dann die parallelgeschalteten Kondensatoren wieder abgeschaltet werden. Bei dieser dualen Stufung der Werte der Kondensatoren 23 kann mit sehr wenigen Kondensatoren ein sehr genauer optimaler Abgleich erfolgen, und dies in relativ wenigen Schritten, nämlich entsprechend der Anzahl der Kondensatoren.

Das Parallelschalten der Kondensatoren während des Abgleichsvorgangs kann dadurch erfolgen, daß die für das Parallelschalten notwendigen Schalter als nichtflüchtige Speicherzellen ausgebildet sind und diese Speicherzellen gleich permanent eingeschrieben werden. Da während des Abgleichsvorgangs aber in den meisten Fällen Kondensatoren nur vorübergehend angeschaltet und dann wieder abgeschaltet werden müssen, kann es zweckmäßig sein, daß zusätzlich zu den nichtflüchtigen Speicherzellen auch dazu parallel arbeitende flüchtige Speicherzellen vorgesehen werden, die während des Abgleichsvorgangs entsprechend eingeschrieben werden, und erst nach Abschluß des Abgleichvorgangs werden deren Inhalte in die nichtflüchtigen Speicherzellen übernommen.

Die bisher beschriebenen Abgleichvorgänge sind insbesondere zweckmäßig durchzuführen nach der Herstellung des Transponders, da dann die größten Abweichungen auftreten, denn für eine kostengünstige Herstellung können keine eng tolerierten Bauelemente verwendet werden, und außerdem werden die Werte von Bauelementen, wenn beispielsweise der gesamte Transponder einschließlich des Schwingkreises in Kunststoff vergossen werden bei diesem Vorgang verändert. Über einen längeren Zeitraum können jedoch die Werte der Elemente insbesondere im Transponder auch nach der Herstellung noch Abweichungen durch z.B. Alterungs- oder Temperatureinflüsse aufweisen, so daß die Resonanzfrequenz des Schwingkreises im Transponder von der Trägerfrequenz der Basisstation so stark abweicht, daß die ordnungsgemäße Funktion nicht mehr sichergestellt ist. Dies kann verhindert werden, indem der Abgleichvorgang während der Benutzung wiederholt wird und die Parallelkapazität zum Schwingkreis durch Zuschalten oder Abschalten von Kondensatoren wieder in der vorstehend beschriebenen Weise optimiert wird. Solche mögliche Änderung von Eigenschaften in Abhängigkeit von der Zeit ist in Fig. 6 angedeutet, wobei der Zeitmaßstab beispielsweise Wochen oder Monate darstellt. Bei der Benutzung des Transponders zum Zeitpunkt t1 hat sich beispielsweise die Resonanzfrequenz des Schwingkreises im Transponder derart verändert, daß der Punkt 60 erreicht wird. Durch einen Abgleichvorgang wird dann die Parallelkapazität erhöht, so daß der Punkt 61 erreicht wird. Dabei ist wieder eine optimale Datenübertragung möglich. Bei einer späteren Benutzung zum Zeitpunkt t2 hat sich beispielsweise durch andere Einflüsse, beispielsweise durch Temperaturänderung gegenüber eines Alterungseinflusses beim Punkt 60 die Resonanzfrequenz geändert, so daß bezüglich der optimalen Parallelkapazität der Punkt 62 erreicht ist. Beim Abgleichvorgang werden dann Parallelkondensatoren abgeschaltet, so daß der Punkt 63 erreicht wird. Zum Zeitpunkt t3 hat sich durch Veränderung der Resonanzfrequenz die optimale Parallelkapazität wieder erhöht, so daß beim Abgleichvorgang Kondensatoren zugeschaltet werden, um den Punkt 65 zu erreichen. Zum Zeitpunkt t4 hat sich die optimale Parallelkapazität durch äußere Einflüsse wieder verringert, so daß der Punkt 66 erreicht wird und durch den Abgleichvorgang Kondensatoren abgeschaltet werden, um den Punkt 67 zu erreichen.

Auf diese Weise wird also durch wiederholte Abgleichvorgänge verhindert, daß die Resonanzfrequenz des Schwingkreises im Transponder sich so weit verändert, daß schließlich keine ausreichende Energieübertragung von der Basisstation zum Transponder stattfindet und ein Datenaustausch oder selbst ein Abgleichvorgang unmöglich wird. Bei den Abgleichvorgängen, die zumindest in Einzelfällen nur geringe Änderungen der Parallelkapazität erfordern, ist es allerdings nicht notwendig, wie aus Fig. 6 hervorgeht, immer die optimale Parallelkapazität auch dauernd abzuspeichern, sondern bei geringen Abweichungen kann es ausreichen, den optimalen Abgleich nur flüchtig für den jeweiligen Benutzungsvorgang durchzuführen und eine permanente Speicherung nur bei wesentlicher Änderung der Parallelkapazität durchzuführen. Damit werden Umschaltvorgänge der nichtflüchtigen Speicherzellen auf ein geringes Maß reduziert.

## Patentansprüche

1. Verfahren zum Betrieb eines Systems aus einer Basisstation und einem kontaktlos mit der Basisstation gekoppelten Transponders mit einer Schaltungsanordnung und mit einem Schwingkreis aus einer Spule und wenigstens einem ersten Kondensator, dem mehrere zweite Kondensatoren parallel schaltbar sind, wobei durch ein von der Basisstation ausgesandtes elektromagnetisches Wechselfeld mit einer festgelegten Frequenz in der Spule des Schwingkreises insbesondere die elektrische Leistung zur Speisung der Schaltungsanordnung erzeugt wird, dadurch gekennzeichnet,
daß im Transponder ein intern gesteuerter Abgleich erfolgt, in dem nach Beginn des Empfangs des Wechselfeldes die in der Spule erzeugte Spannung gemessen wird, dann dem ersten Kondensator ein dritter Kondensator vorgegebener Kapazität parallelgeschaltet wird und die Veränderung der Spannung in der Spule festgestellt wird und abhängig von der Änderung das Abschalten oder Zuschalten wenigstens eines zweiten Kondensators parallel zum ersten Kondensator gesteuert wird.

2. Verfahren nach Anspruch 1, dadurch gekennzeichnet,
daß das Zuschalten oder Abschalten der zweiten Kondensatoren und das Feststellen der Veränderung der Spannung in der Spule wiederholt erfolgt, bis eine vorgegebene Bedingung erfüllt ist.

3. Verfahren nach Anspruch 2, dadurch gekennzeichnet,
daß mehrere zweite Kondensatoren mit dualer Stufung der Kapazitäten vorgesehen sind und beginnend mit dem Kondensator höchster Kapazität nacheinander die Kondensatoren mit abnehmender Kapazität zugeschaltet bzw. abgeschaltet werden.

4. Verfahren nach einem der Ansprüche 1, 2, oder 3, dadurch gekennzeichnet,
daß beim Abgleichvorgang vor dem ersten Zuschalten bzw. Abschalten eines der zweiten Kondensatoren der dritte Kondensator vom Schwingkreis wieder abgeschaltet wird.

5. Verfahren nach einem der Ansprüche 1 bis 4, dadurch gekennzeichnet,
daß der Abgleich wiederholt bei jeder Kopplung des Transponders mit der Basisstation durchgeführt wird.

6. Verfahren nach einem der Ansprüche 1 bis 4, dadurch gekennzeichnet,
daß der Abgleich wiederholt bei einer Kopplung des Transponders mit der Basisstation nur bei Vorliegen vorgegebener Bedingungen durchgeführt wird.

7. Verfahren nach Anspruch 6, dadurch gekennzeichnet,
daß der Abgleich nur durchgeführt wird, wenn die in der Spule erzeugte Spannung unterhalb eines vorgegebenen Schwellwerts liegt.

8. Verfahren nach einem der vorhergehenden Ansprüche, dadurch gekennzeichnet,
daß nach Abschluß wenigstens eines erstmaligen Abgleichs die Kombination zugeschalteter und abgeschalteter zweiter Kondensatoren dauerhaft abgespeichert wird.

9. Verfahren nach einem der Ansprüche 1 bis 7, dadurch gekennzeichnet,
daß nach Abschluß eines wiederholten Abgleichs die Kombination zugeschalteter und abgeschalteter zweiter Kondensatoren für die Dauer der Kopplung flüchtig abgespeichert wird und nur bei Vorliegen vorgegebener Bedingungen permanent abgespeichert wird.

10. System mit einer Basisstation (10), die einen Oszillator (16) zum Erzeugen eines Trägersignals mit festgelegter Frequenz und eine Antenne (11) zum Aussenden des Trägersignals enthält, und mit einem Transponder (1), der eine Schaltungsanordnung (7, 8, 9) und einen Schwingkreis aus einer Spule (2) und einem ersten Kondensator (3), mehrere Reihenschaltungen von je einem zweiten Kondensator und einem Schalter (24), die parallel zum ersten Kondensator (3) angeschlossen sind, wobei die Schalter (24) mit einer Steueranordnung (22) gekoppelt sind, sowie eine an den Schwingkreis angeschlossene Gleichrichterschaltung (6) zum Erzeugen einer Speisespannung für die Schaltungsanordnung (7, 8, 9) bei Empfang eines von der Basisstation (10) ausgesandten Trägersignals in der Spule (2) enthält, dadurch gekennzeichnet,
daß im Transponder (1) ein Spannungsspeicher (20, 21) zum Speichern des momentanen Werts der von der Gleichrichterschaltung (6) erzeugten Speisespannung sowie die Reihenschaltung eines dritten Kondensators (26) und eines Schalters (27) parallel zum ersten Kondensator (3) vorgesehen ist und daß die Steueranordnung (22) eingerichtet ist, um beim Vorliegen vorgegebener Bedingungen nach dem Empfang des Trägersignals den Spannungsspeicher (20, 21) zum Einschreiben des momentanen Werts der Speisespannung und danach den Schalter (27) des dritten Kondensators (26) zum Schließen anzusteuern und danach wiederholt den Wert der dann erzeugten Speisespannung mit dem gespeicherten Wert zu vergleichen und abhängig vom Ergebnis des Vergleichs den Schalter (24) eines der zweiten Kondensatoren (23) anzusteuern und erneut den Spannungsspeicher (21) zum Einschreiben anzusteuern, bis eine vorgegebene Bedingung erfüllt ist.

11. System nach Anspruch 10, dadurch gekennzeichnet,
daß die Steueranordnung (22) eingerichtet ist, um nach dem ersten Vergleich der Werte der Speisespannung den Schalter (27) des dritten Kondensators (26) wieder zum Öffnen anzusteuern.

12. System nach Anspruch 10 oder 11, dadurch gekennzeichnet,
daß zumindest einige der Schalter (24) der zweiten Kondensatoren sowohl flüchtige als auch nichtflüchtige Speicherzellen (28, 29) enthalten.

13. Transponder für ein System nach einem der Ansprüche 10 bis 12.
